# EUROPEAN PATENT APPLICATION

(11) **EP 1 918 830 A2**
(43) Date of publication of application: **07.05.2008**
(21) Application number: 07119485.6
(22) Date of filing: 29.10.2007
(51) Int. Cl.: G06F 17/30

(54) **Apparatus and method of managing image file**

(30) Priority: 30.10.2006 KR 20060105922
(71) Applicant: Samsung Electronics Co., Ltd., Suwon-si, Gyeonggi-Do (KR)
(72) Inventor: Cho, Woo-jong c/o Samsung Advanced Institute of Technology, 446-712, Gyeonggi-do (KR); Choi, Sang-on c/o Samsung Advanced Institute of Technology, 446-712, Gyeonggi-do (KR); Choi, Mun-cheol c/o Samsung Advanced Institute of Technology, 446-712, Gyeonggi-do (KR)
(74) Representative: Grünecker, Kinkeldey, Stockmair & Schwanhäusser Anwaltssozietät

(57) **Abstract**

There is provided an apparatus and method of managing an image file. An apparatus to manage an image file includes a sensor unit measuring at least one of the positions, directions, and angles of image files of objects that are captured, an extracting unit extracting at least one of information on locations where the image files of the objects are captured and information on the captured objects, in which the information corresponds to the measured information and a classifying unit giving names to the captured image files by using the extracted information.

## Description

### CROSS-REFERENCE TO RELATED APPLICATIONS

This application claims priority from Korean Patent Application No. 10-2006-0105922 filed on October 30, 2006 in the Korean Intellectual Property Office, the disclosure of which is incorporated herein by reference in its entirety.

### BACKGROUND OF THE INVENTION

### 1. Field of the Invention

The present invention relates to apparatuses and methods of managing image files, and more particularly, to an apparatus and method of managing an image file that can measure positions, directions, and angles of image files captured by an inertial sensor even when a GPS is disconnected, and increasing the efficiency of giving names to the captured image files and managing the image files by using the measured information.

### 2. Description of the Related Art

Devices, such as cellular phones, which capture objects while moving, can capture image files of objects in various locations. Serial numbers are collectively given to the captured image files. At this time, however, the named image files are not grouped into directories. For example, serial numbers are collectively given to the captured image files, such as IMG_0701, IMG_1532,..., image_001, image_002, image_003, and the like, and the captured image files are named after the serial numbers.

Therefore, users need to check the image files one by one after capturing the objects and classify the image files, or modify the names and group the image files into directories.
This procedure may cause a problem in that the image files are not appropriately grouped or the image files are overlapped and damaged.

Further, according to the related art, there are often problems in that when a global positioning system (GPS) is disconnected, or when the number of image files increases, it is hard to manage the image files.

### SUMMARY OF THE INVENTION

Additional aspects and/or advantages of the invention will be set forth in part in the description which follows and, in part, will be apparent from the description, or may be learned by practice of the invention.

An aspect of the present invention is to provide an apparatus and method of managing an image file that can increase efficiency of giving names to captured image files and managing the image files.

Aspects of the present invention are not limited to those mentioned above, and other objects of the present invention will be apparently understood by those skilled in the art through the following description.

According to one aspect of the present invention, there is a provided an apparatus to manage an image file, the apparatus including a sensor unit to measure at least one of the positions, directions, and angles of image files of objects that are captured, an extracting unit to extract at least one of information on locations where the image files of the objects are captured and information on the captured objects, each information corresponding to the measured information, and a classifying unit to give names to the captured image files by using the extracted information.

According to another aspect of the present invention, there is a provided a method of managing an image file, the method including measuring at least one of the positions, directions, and angles of image files of objects that are captured, extracting at least one of information on locations where the image files of the objects are captured and information on the captured objects, each information corresponding to the measured information, and giving names to the captured image files by using the extracted information.

### BRIEF DESCRIPTION OF THE DRAWINGS

These and/or other aspects and advantages of the invention will become apparent and more readily appreciated from the following description of the embodiments, taken in conjunction with the accompanying drawings of which:
FIG. 1 is a conceptual diagram of an apparatus to manage an image file according to an embodiment of the invention;
FIG. 2 is a block diagram of an apparatus to manage an image file according to an embodiment of the invention;
FIG. 3 is a flow chart of a method of managing an image file according to an embodiment of the invention;
FIG. 4 is an exemplary diagram illustrating a case where objects are captured from different directions and angles; and
FIG. 5 is a diagram illustrating an example of when image files are given names or classified according to an embodiment of the invention.

### DETAILED DESCRIPTION OF THE PREFERRED EMBODIMENTS

Reference will now be made in detail to the embodiments of the present invention, examples of which are illustrated in the accompanying drawings, wherein like reference numerals refer to the like elements throughout. The embodiments are described below to explain the present invention by referring to the figures.

Advantages and features of the present invention and methods of accomplishing the same may be understood more readily by reference to the following detailed description of preferred embodiments and the accompanying drawings. The present invention may, however, be embodied in many different forms and should not be construed as being limited to the embodiments set forth herein. Rather, these embodiments are provided so that this disclosure will be thorough and complete and will fully convey the concept of the invention to those skilled in the art, and the present invention will only be defined by the appended claims. Like reference numerals refer to like elements throughout the specification.

The present invention will now be described more fully with reference to the accompanying drawings, in which preferred embodiments of the invention are shown.

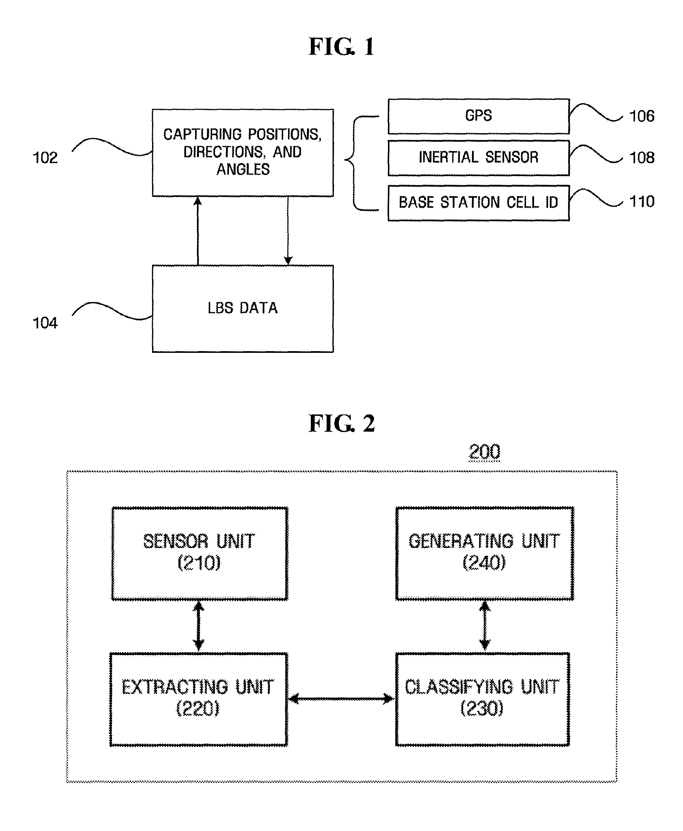

FIG. 1 is a conceptual diagram of an image file management according to an embodiment of the invention.

According to an embodiment of the invention, in order to classify captured image files and automatically name the image files, physical data 102 when capturing the image files, such as positions, directions, and angles of the image files, and location based service (LBS) data 104 that connects the physical data to information on locations where the image files are captured or information on the captured objects may be used. The locations of the captured image files may be obtained by using a global positioning system (GPS) 106, an inertial sensor 108, or a base station cell ID 110. Further, the LBS data 104 may be stored in a memory in a device or received from a network server.

Therefore, according to the embodiment of the invention, the inertial sensor 108 is used in indoor spaces where the GPS 106 does not operate and when the captured positions cannot be measured with the resolution of the GPS 106 so as to measure the captured positions, directions, and angles, which may be used when classifying and naming the image files.

In the related art, it is possible to measure captured positions (latitude and longitude) by using the GPS 106. That is, since the resolution of the GPS 106 is tens of meters or more in normal conditions, the GPS 106 can only provide data on the captured positions. In contrast, the inertial sensor 108 can measure the captured positions, directions, and angles within a range of several centimeters. Further, the inertial sensor 108 has an advantage that even when the GPS 106 is disconnected, the positions may be measured by autonomous navigation. The base station cell ID 110 can measure positions that may have large errors of hundreds of meters.

Meanwhile, the GPS 106 that needs to receive a weak signal from a navigation satellite does not operate in areas, such as the downtown, indoors, the woods, and the like. Since in most cases, image files of objects are generally captured in locations where the GPS 106 does not operate, the classification of the image files may not be performed. In this case, according to the embodiment of the invention, by using position tracking by the base station cell ID 110 and the inertial sensor 108, it is possible to measure the captured positions, directions, and angles even in locations where the GPS 106 does not operate.

FIG. 2 is a block diagram of an apparatus for managing an image file according to an embodiment of the invention.

An apparatus to manage an image file 200 includes a sensor unit 210, an extracting unit 220, a classifying unit 230, and a generating unit 240.

The sensor unit 210 measures at least one of the positions, directions, and angles of image files of objects that are captured. The sensor unit 210 may use at least any one of the GPS 106, the inertial sensor 105, and the base station cell ID 110.

The GPS is a system that uses a satellite to track the position thereof on earth, and provides three-dimensional velocity information and accurate time as well as positional information including latitude, longitude, and altitude. Therefore, the sensor unit 210 functions as a GPS receiver to acquire positional information. Further, the inertial sensor 108 may include an acceleration sensor, a terrestrial magnetism sensor, a gyro sensor, and/or the like. The inertial sensor 108 detects the inertial force due to the movement, and provides various kinds of information related to navigation, such as the acceleration, the velocity, the direction, and the distance of an object in motion that is to be measured. The base station cell ID 110 may be a class number of a base station. For example, when the user is informed which base station a user's cellular phone is connected to, the user can know the position of the user' cellular phone on the basis of the position of the corresponding base station.

Meanwhile, even when the GPS is disconnected while the sensor unit 210 uses the GPS and the inertial sensor being connected with each other, the sensor unit 210 can measure the positions, directions, and angles of the image files of the objects that are captured by using the inertial sensor 108. That is, the inertial sensor 108 can estimate the position at a point of time when the GPS is disconnected, and calculate information on the directions and the angles. Further, when errors of measured values exceed threshold values while the sensor unit 210 uses the inertial sensor 108, the sensor unit 210 can measure the captured position by using the base station cell ID.

As such, the sensor unit 210 may connect the GPS 106, the inertial sensor 108, and the base station cell ID 110 to one another to measure the positions, directions, and angles of the image files of the objects that are captured.

The extracting unit 220 extracts at least one of information on locations where the image files of the objects are taken and information on the captured objects, in which the information corresponds to the extracted information. The extracting unit 220 can extract the information on the capturing locations and the information on the captured objects that correspond to the measured information by using location based service (LBS) data. At this time, the LBS data may be embedded in the user's device (not shown) or stored in a network server (not shown).

That is, the extracting unit 220 searches for the LBS data corresponding to the extracted information, and can extract information on names of places (i.e., capturing locations), and the information on the captured objects, which are stored in the LBS data. For example, when the user captures Daeungjeon of Bulguksa, the sensor unit 210 measures information on position, direction and angle of an image file of Daeungjeon that is captured, and then measures latitude and longitude on the basis of the corresponding information. The extracting unit 220 searches for LBS data that corresponds to the latitude and longitude of the capturing locations. Therefore, the information on the Daeungjeon of Bulguksa corresponding to the latitude and longitude is extracted from the LBS data.

The classifying unit 230 gives names to the captured image files by using the extracted information or classifies the image files according to a predetermined criterion. For example, when the extracted information corresponds to Bulguksa (capturing location) and Daeungjeon (image), the name of the image file may be "Bulguksa-Daeungjeon.jpg". When there are a plurality of image files that are captured in Bulguksa, a directory named Bulguksa is created, and the captured image files may be classified according to the capturing locations. Further, when the user captures objects in a different capturing location (Cheonggyecheon), a directory named Cheonggyecheon is created, and image files captured in Cheonggyecheon are automatically put in the directory.

The generating unit 240 generates meta files to upload or searching for the image files by using the extracted information. That is, the generating unit 240 generates the meta files to upload and searching for the image files by using the extracted information on the capturing locations and the captured objects. Therefore, the user can easily search for desired image files at a high speed using the extracted information. It is understood that the generating unit 240 may be omitted.

Each of the components shown in FIG. 2 may be composed of a kind of "module".
The term "module" means software, or a hardware component such as an FPGA (Field Programmable Gate Array) or an ASIC (Application Specific Integrated Circuit) and the modules each perform allocated functions. However, the modules are not limited to software or hardware. The modules may be configured in an addressable storage medium, or may be configured to run on at least one processor. Therefore, as an example, the modules include: components such as software components, object-oriented software components, class components, and task components; processors, functions, attributes, procedures, sub-routines, segments of program codes, drivers, firmware, microcodes, circuits, data, databases, data structures, tables, arrays, and variables. The functions provided by the components and the modules may be combined into fewer components and or modules may be separated into additional components and modules.

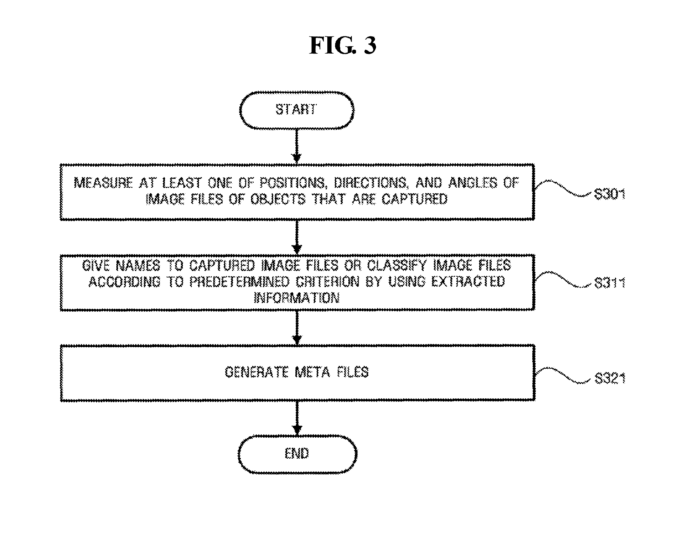

FIG. 3 is a flow chart of a method of managing an image file according to an embodiment of the invention.

When the user captures image files of objects, the sensor unit 210 measures at least one of the positions, directions, and angles of the image files of the objects that are captured (Operation S301).

At this time, when the GPS and the inertial sensor are connected to each other, the positions at which the image files of the objects are captured can be measured by the GPS, and the directions and angles of the image files of the objects captured can be measured by the inertial sensor.

When the GPS is disconnected, the sensor unit 210 measures information on the positions, directions, and angles of the image files of the objects captured through the inertial sensor, and acquires latitude and longitude data on the basis of the measured information. Further, when errors of values measured by the inertial sensor exceed predetermined threshold values because the errors are increased in a case of the movement of predetermined distance or more (generally several kilometers), the sensor unit 210 can calculate the positions of the image files of the objects captured by using the base station cell ID 110. The base station cell ID provides a location accuracy of several kilometers.

In the next process, the classifying unit 230 gives names to the captured image files or classifies the image files according to a predetermined criterion on the basis of the extracted information (Operation S311).

At this time, by using LBS data 104, information on locations where the image files of the objects are captured, and information on the captured objects can be extracted, in which the information corresponds to the positions, directions, and angles of the image files of the objects captured. The classifying unit 230 gives names to the image files on the basis of the extracted information. For example, according to objects, the image files may be named, for example, Daeungjeon.jpg, Dabotap.jpg, Samcheung Seoktap.jpg, and the like, and according to locations (or location name), the image files may be grouped into directories, such as Gyeongbokgung, Deoksugung, and the like.

Further, the generating unit 240 generates meta files to upload or search for the image files on the basis of the extracted information (Operation S321). In another embodiment, this process (Operation S321) may not be included.

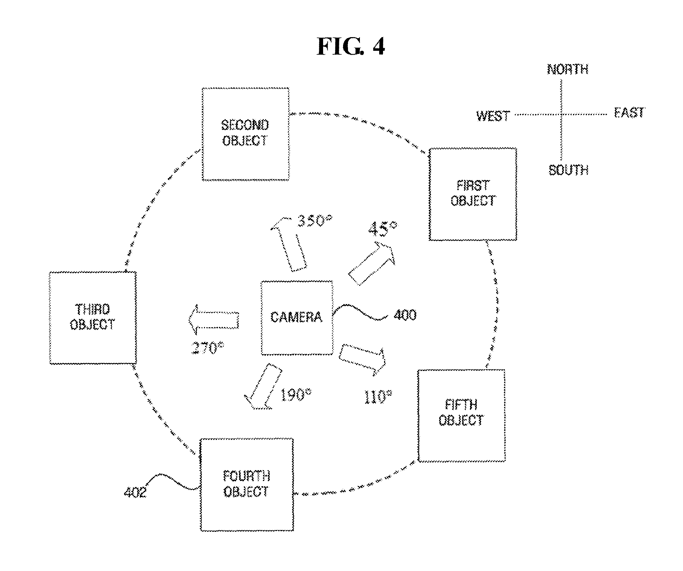

FIG. 4 is an exemplary diagram illustrating a case where objects are captured from different directions and angles.

In general, in most cases, image files of various objects are captured from different directions and angles in one location. Even when the GPS 106 operates, image files captured at the resolution exceeding the GPS resolution (several tens of meters) may not be classified as image files. That is, the GPS only provides information on the positions at which the image files of the objects are captured. However, the inertial sensor 108 measures the directions, angles and the like, and is capable of measuring a small change in position that may exceed the GPS resolution.

As shown in FIG. 4, when image files are captured from different angles of a camera in one position, since GPS data is not changed, the image files are not automatically classified. At this time, if information by the inertial sensor 108 is used, the captured objects can be known, and the captured image files can be classified. That is, the GPS 106 only provides the information on the position at which the image files are captured, while the inertial sensor 108 can discriminate the objects from each other on the basis of the directions and angles of the image files of the objects captured.

For example, when the GPS 106 and the inertial sensor 108 are used in connection to each other, and a camera 400 captures an image file of a southwestern fourth object 402 at an angle of 190°, the GPS can provide a position at which the image file is taken, and the inertial sensor 108 can provide information on direction and angle of the image file of the fourth object 402. Therefore, latitude and longitude of the capturing locations can be measured, and then a name of the fourth object 402 and a location where the image file of the fourth object 402 is captured can be known by using the LBS data. Further, even though the GPS 106 is disconnected, the inertial sensor 108 provides information on the positions, directions and angles of the image files of the object captured, which solves the problem in the related art that occurs when the GPS is disconnected.

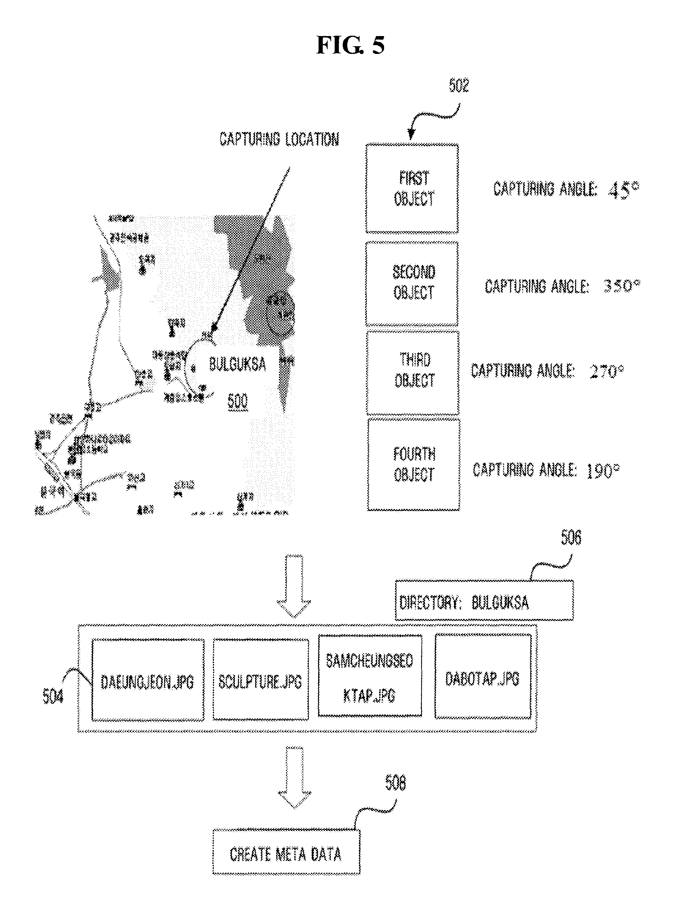

FIG. 5 is a diagram illustrating a case where image files are given names or classified.

As shown in FIG. 5, information on locations where image files of objects are captured and information on the objects captured are extracted by connecting positions, directions, and angles of the captured image files to LBS data. Further, on the basis of the extracted information, the captured image files are named or are grouped into directories.

More specifically, when a location at which image files of objects are captured is Bulguksa 500, and the image files of the objects are captured at different angles of the camera in Bulguksa 500, the image files of first to fourth objects 502 are captured from respective directions and angles. At this time, in respects to the information on the positions, directions, and angles of the image files of the objects captured, the objects may be named differently from one position at which the image files of the objects are captured.

For example, latitude and longitude of the capturing locations can be calculated on the basis of the positions, directions, and angles, and then data corresponding to the latitude and longitude is extracted from the LBS data, such that the captured objects and the capturing location can be recognized.

At this time, names of the image files of the objects 502 that are captured may be given by using the data extracted from the LBS data. For example, the first object that is captured is Daeungjeon of Bulguksa, the extracting unit 220 can extract data on Bulguksa and Daeungjeon on the basis of the LBS data corresponding to the latitude and longitude, and the classifying unit 230 may name the image file of the first object Daeungjeon.jpg 504.

Further, the image files can be grouped into directories according to a predetermined criterion. For example, when image files are classified on the basis of locations where the image files are captured, if the locations of the objects that are captured are Bulguksa and Gyeongbokgung, image files of the objects captured in Bulguksa are stored in a Bulguksa directory 506, and image files of the objects captured in Gyeongbokgung are stored in a Gyeongbokgung directory (not shown).

Further, by using the information extracted from the LBS data, meta files are generated and used to search for and upload the image files (508).

Although the present invention has been described in connection with the exemplary embodiments of the present invention, it will be apparent to those skilled in the art that various modifications and changes may be made thereto without departing from the scope and spirit of the invention. Therefore, it should be understood that the above embodiments are not limitative, but illustrative in all aspects.

According to the apparatus and method of managing an image file of the invention, the following effects can be obtained.

First, even when image files are captured at the same position, the image files can be minutely classified according to directions and angles of captured image files.

Second, the image files can be automatically classified even indoors or when in a moving vehicle.

Third, when errors of values measured by the inertial sensor are increased, the image files can be simply classified by using a base station cell ID.

Fourth, additional information when obtaining images, such as the positions, directions, angles, and the like, can be inserted into meta files that are used to search for the image files and the like.

Although a few embodiments of the present invention have been shown and described, it would be appreciated by those skilled in the art that changes may be made in these embodiments without departing from the principles and spirit of the invention, the scope of which is defined in the claims and their equivalents.

## Claims

1. An apparatus to manage an image file, the apparatus comprising:
a sensor unit to measure at least one of the positions, directions, and angles of image files of objects that are captured;
an extracting unit to extract at least one of information on locations where the image files of the objects are captured and information on the captured objects, each information corresponding to the measured information; and
a classifying unit to give names to the captured image files by using the extracted information.

2. The apparatus of claim 1, wherein the sensor unit comprises at least one of a global positioning system (GPS), an inertial sensor, and a base station cell ID (Idenification).

3. The apparatus of claim 2, wherein the inertial sensor comprises at least any one of an acceleration sensor, a terrestrial magnetism sensor, and a gyro sensor, or combinations thereof.

4. The apparatus of claim 1, further comprising:
a generating unit to generate meta files for uploading or searching for the image files by using the extracted information.

5. The apparatus of claim 1, wherein the extracting unit extracts information on the capturing locations and information on the captured objects by using location based service (LBS) data.

6. The apparatus of claim 1, wherein when the GPS is disconnected, the sensor unit measures at least any one of the positions, directions, and angles of the image files of the objects that are captured by using the inertial sensor.

7. The apparatus of claim 1, wherein when errors of values measured by the inertial sensor exceed threshold values, the sensor unit measures the locations where the image files of the objects are captured by using a base station cell ID.

8. The apparatus of claim 1, wherein the classifying unit classifies the image files according to a predetermined criterion.

9. The apparatus of claim 8, wherein the predetermined criterion is a name of location where the object are captured or a name of the captured objects.

10. A method of managing an image file, the method comprising:
measuring at least one of the positions, directions, and angles of image files of objects that are captured;
extracting at least one of information on locations where the image files of the objects are captured and information on the captured objects, each information corresponding to the measured information; and
giving names to the captured image files by using the extracted information.

11. The method of claim 10, wherein the measuring of the at least one of the positions, directions, and angles of the image files uses at least one of a global positioning system (GPS), an inertial sensor, and a base station cell ID.

12. The method of claim 11, wherein the inertial sensor comprises at least one of an acceleration sensor, a terrestrial magnetism sensor, and a gyro sensor.

13. The method of claim 10, further comprising:
generating meta files(data) for uploading or searching for the image files by using the extracted information.

14. The method of claim 10, wherein the extracting of the at least one of the information on the locations where the image files of the objects are captured and the information on the captured objects extracts the information on the capturing locations and the information on the captured objects by using location based service (LBS) data.

15. The method of claim 10, wherein the measuring of the at least one of positions, directions, and angles measures the positions, directions and angles of the image files of the objects by using the inertial sensor when the GPS is disconnected.

16. The method of claim 10, wherein the measuring of the at least one of positions, directions, and angles measures the locations where the image files of the objects are captured by using a base station cell ID when errors of values measured by the inertial sensor exceed threshold values.

17. The method of claim 10, wherein the giving of the names to the captured image files comprises:
classifying the image files according to a predetermined criterion.

18. The method of claim 17, wherein the predetermined criterion is a name of location where the object are captured or a name of the captured objects.

19. A method of managing an image file, the method comprising:
using at least one of information on locations where an object is captured and information on the captured object;
creating a directory or a file name of the image file of the captured object using the information; and
storing the image file under the created directory or the image file using the file name.

20. The method of claim 19, further comprising:
measuring positions, directions, and angles of the image where the object is captured using least one of a global positioning system (GPS), an inertial sensor, and a base station cell ID.

21. The method of claim 19, further comprising:
retrieving the image file using the information.
